# EUROPEAN PATENT SPECIFICATION

(11) **EP 0 548 779 B1**
(45) Date of publication and mention of the grant of the patent: **12.03.1997**
(21) Application number: 92121406.0
(22) Date of filing: 16.12.1992
(51) Int. Cl.: B29C 45/17

(54) **Method and means for the injection moulding of synthetic thermoplastic resins**
Verfahren und Vorrichtung zum Spritzgiessen von thermoplastischen Kunststoffen
Procédé et dispositif pour le moulage par injection de matières synthétiques thermoplastiques

(30) Priority: 20.12.1991 IT TO911007
(43) Date of publication of application: 30.06.1993
(73) Proprietor: FIAT AUTO S.p.A., 10135 Torino (IT)
(72) Inventor: DA RE, Mario, I-10100 Torino (IT)
(74) Representative: Plebani, Rinaldo

(56) References cited:
- US-A- 5 015 166
- US-A- 5 039 463
- PATENT ABSTRACTS OF JAPAN vol. 15, no. 298 (M-1141)29 July 1991 & JP-A-3 110 116 (SEKISUI)
- PATENT ABSTRACTS OF JAPAN vol. 10, no. 118 (M-475)(2175) 2 May 1986& JP-A-60 247 511 (MITSUKAZU HORI)
- PATENT ABSTRACTS OF JAPAN vol. 8, no. 94 (M-293)(1531) 28 April 1984& JP-A-59 009 015 (MITSUBISHI DENKI)

## Description

This invention relates to a method and means for the injection moulding of synthetic thermoplastic resins.

Method and means for the injection moulding of synthetic thermoplastic resins in which the synthetic resin is prepared in a suitable apparatus and reduced to the fluid state and is then injected through a needle into a corresponding mould having the shape of the part which it is intended to produce are currently known. Together with the thermoplastic resin, a certain quantity of inert gas is also injected into the mould by means of a second needle which is positioned within the fused mass of resin, and in addition to ensuring greater lightness of the finished product this also ensures better distribution of the resin within the mould and a better surface finish for the said part, eliminating any aesthetic imperfections on the surface which are mainly to be found upon any ribs on the part.

The method which has just been described is not however without disadvantages. The difficulty of controlling the movements of the inert gas within the mass of fused resin within the mould, and the difficulty of determining the physical parameters for injecting the gas, substantially the delivery pressure within the mould, makes it necessary to form numerous prototypes of the part in order to determine the abovementioned physical parameters such as temperature, gas pressure, optimum position of the needle in the gas, any preferential routes taken by the gas within the mould, in order to obtain finished pieces of high quality, which are light and free from aesthetic surface imperfections. These drawbacks are overcome in part only by US-A-5,039,463, which provides a minimum of control of the gas with temperature of the mould.

The object of this invention is to provide a method and means which overcome the disadvantages described, making it possible to control the distribution of the gas within the mould by varying the aforesaid physical parameters, and to obtain parts free from any aesthetic defects, which are light, and which have reduced production costs, reliably by the injection moulding of thermoplastic resins.

In accordance with this invention a method is provided for the injection moulding of synthetic thermoplastic resins, the method having the features recited in Claim 1.

In accordance with this invention, means are also provided for the injection moulding of synthetic thermoplastic resins, having the features recited in Claim 4.

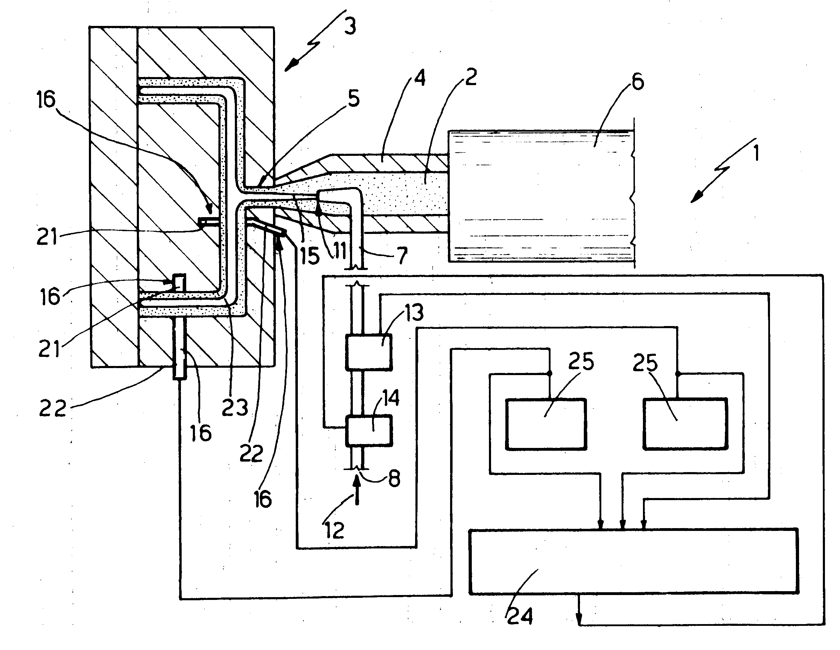

For a better understanding of the invention a non-restrictive description of an embodiment thereof will now be provided with reference to the appended drawing in which a view in cross-section is side elevation of means for the injection moulding of synthetic thermoplastic resins in accordance with this invention is illustrated diagrammatically.

With reference to the appended drawing, 1 indicates means for the injection moulding of synthetic thermoplastic resin 2 in a mould 3.

Means 1 substantially comprises a first injection needle 4 which in turn comprises an outlet end 5 within mould 3, and also comprises an injection system 6 for reducing a first synthetic thermoplastic resin 2 to the fluid state.

In accordance with this invention means 1 also comprises a second needle 7, located within said first needle 4, between outlet end 5 and said injection system 6.

Second needle 7 is connected at an end 8 opposite a corresponding end 11 inserted in first needle 4 to a corresponding tank, which is not illustrated in the figure, containing a pressurised inert gas 12. Here and in the remainder of the description which follows "inert gas" is to be understood to be any gaseous fluid of a chemical nature which will not interact chemically with the synthetic plastic resin in the fluid state which is injected together with it. Thus inert gas 12 will generally be ambient air (suitably filtered) which does not give rise to appreciable oxidation effects with the normal thermoplastic resins in commercial use and therefore can be regarded as being effectively "inert" in the sense used.

A pressure gauge 13, for measuring the delivery pressure of gas 12, and an electrically operated valve 14, for controlling the said pressure, are located between the tank and the end 11 of second needle 7. Second needle 7 is used to pass inert gas 12 into a one-directional flow 15 of thermoplastic resin 2 in first needle 4.

In accordance with the invention means 1 comprises a series of sensors 16, in the case in point of the ultrasonic type, located within mould 3 along the path 18 along which mould 3 is filled by thermoplastic resin 2 containing inert gas 12 within.

Sensors 16 comprise an emitter member 21 and a receiver member 22 respectively, located on opposite sides respectively of a cavity 23 provided within mould 3, and are respectively connected to a central electronic unit 24 which collects and processes the signals originating from sensors 16.

In accordance with the injection moulding method according to this invention the data collected by central unit 24 can then be stored in respective data banks 25, or may also be directly used to control the pressure with which gas 12 is delivered to needle 7 and therefore mould 3. In fact central unit 24 receives a signal proportional to the output pressure of the gas 12 as an input from pressure gauge 13, and at the same time sends a corresponding signal to electrically operated valve 14 to control and adjust the delivery pressure of gas 12.

The advantages associated with this invention are obvious from what has been described. The possibility of controlling the physical parameters and the distribution of inert gas and thermoplastic resin within the mould in real time through the ultrasonic sensors and if appropriate through other sensors (e.g. temperature sensors, again located within mould 3) makes it possible to obtain pieces of high quality without having to resort to numerous test prototypes. The information provided by the sensors also makes it possible, by storing significant data in a database, to achieve an appreciable simplification in the design and construction of injection moulds for thermoplastic resins with added inert gas.

## Claims

1. A method for the injection moulding of synthetic thermoplastic resins (2) in which, in the course of an injection stage during which a thermoplastic resin (2) which has been reduced to the fluid state is injected into a mould (3), a flow (15) of inert gas (12) is passed into the said thermoplastic resin (2), and wherein said injection stage in which the said mould (3) is filled with the said resin (2) mixed with the said inert gas (12) is controlled by means of at least one sensor (16) housed within the said mould (3);
**characterized** in that
- in said injection stage it is the distribution of the said flow (15) of gas (12) within the said thermoplastic resin (2) that is controlled, said control being carried out by means of a plurality of sensors (16) of ultrasonic type housed within the mould (3);
and in that
- the corresponding signals emitted by the said sensors (16) are collected and processed in an electronic processing unit (24) and used in a feed-back cycle to control the outlet pressure of said gas (12) during said injection stage.

2. A method for injection moulding according to claim 1, characterized in that the data selected by the said electronic processing unit (24) are stored in a database (25).

3. A method for injection moulding according to claim 1 or 2, characterized in that the said electronic processing unit (24) receives as an input a signal which is proportional to the pressure of the said inert gas (12), the said central processing unit (24) controlling as an output an electrically-operated valve (14) to adjust the outlet pressure of the said gas (12).

4. Means (1) for the injection moulding of synthetic thermoplastic resins (2) of the type comprising a mould (3), a needle (4) for injection of the said resin (2) into the said mould (3), an injection system (6), a second needle (7) for passing an inert gas (12) into a one-directional flow (15) of the said thermoplastic resin (2) in the fluid state, a series of sensors (16) able to control the filling of the mould (3), an electrically-operated valve (14) to adjust the outlet pressure of the said gas (12), and an electronic processing unit (24) for receiving signals from said sensors (16), **characterized** in that the said sensors (16) are ultrasonic sensors borne by the said mould (3) and located along a path (18) along which the mould (3) is filled with said thermoplastic resin (2) and said inert gas (12); and in that said processing unit (24) is designed for controlling the aperture of said valve (14) in response to the signals received from said sensors (16).

5. Means (1) for injection moulding according to claim 4, characterized in that the said sensors (16) comprise an emitter member (21) and a receiver member (22) respectively, which are located on opposite sides respectively of a cavity (23) provided within the said mould (3).

## Patentansprüche

1. Verfahren zum Spritzgießen eines thermoplastischen Kunststoffes (2), bei dem im Verlauf einer Einspritzstufe, durch die ein thermoplatischer Kunststoff, der in den fließfähigen Zustand gebracht ist, in eine Form (3) eingespritzt wird, ein Strom (15) eines inerten Gases (12) in den thermoplastischen Kunststoff eingespeist wird, wobei diese Einspritzstufe, in der der Kunststoff (2) mit dem inerten Gas (12) für das Einspritzen in die Form gemischt wird, durch mindestens einen in der Form (3) angeordneten Fühler (16) gesteuert wird, dadurch gekennzeichnet, daß
- in der Einspritzstufe die Verteilung des Stromes (15) des inerten Gases (16) innerhalb des thermoplastischen Kunststoffes (2) gesteuert wird, wobei diese Steuerung durchgeführt wird durch eine Vielzahl von innerhalb der Form angeordneten Ultraschall-Fühlern (16);
und daß
- die von den Fühlern (16) abgegebenen entsprechenden Signale in einer elektronischen Verarbeitungseinheit (24) gesammelt und verarbeitet und in einer Rückkoppelschleife dazu benutzt werden, den Austrittsdruck des Gases (12) in der Einspritzstufe zu steuern.

2. Verfahren nach Anspruch 1, dadurch gekennzeichnet, daß die Daten, die durch die elektronische Verarbeitungseinheit ausgewählt werden, in einer Datenbasis (25) gespeichert werden.

3. Verfahren nach Anspruch 1 oder 2, dadurch gekennzeichnet, daß die elektronische Verarbeitungseinheit (24) ein Eingangssignal erhält, das proportional zu dem Druck des inerten Gases (12) ist, und mit einem Ausgangssignal ein Elektroventil (14) zum Einstellen des Austrittsdruckes des Gases (12) steuert.

4. Vorrichtung (1) zum Spritzgießen von thermoplastischem Kunststoff (2) mit einer Form (3), einer Düse (4) zum Einspritzen des Kunststoffes (2) in die Form (3), einem Einspritzsystem (6), einer zweiten Düse (7) zum Einströmen eines inerten Gases (12) in den Strom (15) des fließfähigen thermoplastischen Kunststoffes, in gleicher Richtung wie dieser, einer Reihe von Fühlern (16) zur Erfassung der Befüllung der Form (3), einem Elektroventil (14) zum Einstellen des Austrittsdruckes des inerten Gases (12), und mit einer elektronischen Verarbeitungsstufe (24), die Signale der Fühler erhält, dadurch gekennzeichnet, daß die Fühler (16) Ultraschall-Fühler für von der Form (3) erzeugtem Ultraschall sind und entlang eines Weges angeordnet sind, entlang dessen die Form (3) mit dem thermoplastischen Kunststoff verfüllbar ist, und daß die elektronische Verarbeitungsstufe (24) so ausgelegt ist, daß sie in Abhängigkeit von den Signalen, die sie von den Fühlern (16) erhält, die Durchlaßöffnung des Elektroventils (14) steuert.

5. Vorrichtung nach Anspruch 4, dadurch gekennzeichnet, daß die Fühler (16) einen Emitterteil (21) und einen Empfangsteil (22) aufweisen, die auf entgegengesetzten Seiten einer in der Form (3) ausgebildeten Ausnehmung (23) angordnet sind.

## Revendications

1. Procédé pour le moulage par injection de résines synthétiques thermoplastiques (2) dans lequel, pendant un stade d' injection au cours duquel une résine thermoplastique (2) qui a été amenée à l'état fluide est injectée dans un moule (3), un flux (15) de gaz inerte (12) est introduit dans ladite résine thermoplastique (2), et dans lequel ledit stade d'injection, au cours duquel ledit moule (3) est rempli avec ladite résine (2) mélangée avec le dit gaz inerte (12), est commandé au moyen d'au moins un détecteur (16) logé à l'intérieur dudit moule (3) ; caractérisé en ce que :
dans ledit stade d'injection, c'est la distribution dudit flux (15) de gaz (12) dans ladite résine thermoplastique (2) qui est commandée, ladite commande étant effectuée au moyen d'une pluralité de détecteurs (16) du type à ultrasons, logés à l'intérieur du moule (3) ;
et les signaux correspondants émis par lesdits détecteurs (16) sont collectés et traités dans une unité de traitement électronique (24) et utilisés dans un cycle de réaction pour régler la pression de sortie dudit gaz (12) pendant ledit stade d'injection.

2. Procédé pour le moulage par injection suivant la revendication 1, caractérisé en ce que les données choisies par ladite unité de traitement électronique (24) sont stockées dans une base de données (25).

3. Procédé pour le moulage par injection suivant la revendication 1 ou 2, caractérisé en ce que ladite unité de traitement électronique (24) reçoit comme entrée un signal qui est proportionnel à la pression dudit gaz inerte (12), ladite unité centrale de traitement (24) commandant, comme sortie, une électrovanne (14) pour régler la pression de sortie dudit gaz (12).

4. Dispositif (1) pour le moulage par injection de résines synthétiques thermoplastiques (2) du type comprenant un moule (3), une aiguille (4) pour injection de ladite résine (2) dans ledit moule (3), un système d'injection (6),une deuxième aiguille (7) pour introduire un gaz inerte (12) dans un écoulement unidirectionnel (15) de ladite résine thermoplastique (2) à l'état fluide, une série de détecteurs (16) permettant de contrôler le remplissage du moule (3), une électrovanne (14) pour régler la pression de sortie dudit gaz (12), et une unité de traitement électronique (24) pour recevoir des signaux des dits détecteurs (16), caractérisé en ce que lesdits détecteurs (16) sont des détecteurs à ultrasons portés par ledit moule (3) et placés le long d'un chemin (18) suivant lequel le moule (3) est rempli avec ladite résine thermoplastique (2) et ledit gaz inerte (12) ; et en ce que ladite unité de traitement (24) est conçue pour commander l'ouverture de ladite vanne (14) en réponse aux signaux fournis par lesdits détecteurs (16).

5. Dispositif (1) pour le moulage par injection suivant la revendication 4, caractérisé en ce que lesdits détecteurs (16) comprennent un émetteur (21) et un récepteur (22) respectivement, qui sont placés sur des côtés opposés respectivement d'une cavité (23) prévue à l'intérieur dudit moule (3).
